# EUROPÄISCHE PATENTSCHRIFT

(11) **EP 2 322 369 B1**
(45) Veröffentlichungstag und Bekanntmachung des Hinweises auf die Patenterteilung: **22.02.2017**
(21) Anmeldenummer: 10014398.1
(22) Anmeldetag: 09.11.2010
(51) Int. Cl.: B60H 1/34

(54) **Fahrzeugbelüftungssystem**
Vehicle ventilation installation
Installation de ventilation pour véhicule

(30) Priorität: 12.11.2009 DE 102009052922
(43) Veröffentlichungstag der Anmeldung: 18.05.2011
(73) Patentinhaber: ITW Fastener Products GmbH, 58642 Iserlohn (DE)
(72) Erfinder: Schlippe, Michael, 67659 Kaiserslautern (DE)
(74) Vertreter: Hauck Patentanwaltspartnerschaft mbB

(56) Entgegenhaltungen:
- EP-A1- 1 785 298
- EP-A1- 1 810 855
- EP-A1- 1 972 475
- EP-A1- 2 062 763
- WO-A1-2005/016673
- DE-A1-102008 059 736

## Beschreibung

Die Erfindung betrifft ein Fahrzeugbelüftungssysfem mit einem ersten und einem zweiten Luftführungskanal.

Moderne Fahrzeugbelüftungssysteme weisen mehrere Luftführungskanäle auf, durch die einem Fahrzeuginnenraum Frischluft zugeführt werden kann. Durch die verschiedenen Luftführungskanäle kann der Luftstrom unterschiedlich gesteuert werden, um die Belüftung des Fahrzeuginnenraums an die Wünsche eines Fahrzeuginsassen anzupassen. Dazu weist beispielsweise einer der Luftführungskanäle Verwirbelungselemente auf, die die durchströmende Luft verwirbeln, wodurch der Luftstrom stark verlangsamt wird und die ausströmende Luft über einen größeren Austrittswinkel verteilt wird. Der Fahrzeuginsasse wird nicht direkt vom einem Luftstrom angeströmt, so dass der Komfort im Fahrzeuginnenraum erhöht wird. Ein zweiter Luftführungskanal kann dagegen eingesetzt werden, um eine gerichtete Belüftung zu erzeugen. Dieser weist Führungseinrichtungen auf, um den Luftstrom zu kanalisieren und punktuell an eine bestimmte Stelle zu leiten. Ein solches Fahrzeugbelüftungssystem ist beispielsweise aus der DE 10 2008 059 736 A1 bekannt. Die Luftführungskanäle zur punktuellen Belüftung, sogenannte Spots, sind hier durch zwei Rohre gebildet, die im Fahrzeugbelüftungssystem schwenkbar gelagert sind. Solche Fahrzeugbelüftungssysteme weisen eine große Einbautiefe auf.

Aus der EP 1 785 298 A1 ist ein Fahrzeugbelüftungssystem bekannt, das einen ersten Luftführungskanal mit einer ersten Luftaustrittsöffnung und einen zweiten Luftführungskanal mit einer zweiten Luftaustrittsöffnung aufweist. In Strömungsrichtung hinter den Luftführungskanälen ist eine Umlenkungseinrichtung angeordnet, wobei die Umlenkungseinrichtung in einem gewissen Abstand an die erste und die zweite Luftaustrittsöffnung angrenzt und den gesamten Bereich der Luftaustrittsöffnungen abdeckt.

Ein ähnliches Fahrzeugbelüftungssystem ist aus der WO 2005/016 673 A1 bekannt.

Aufgabe der Erfindung ist es, ein Fahrzeugbelüftungssystem der eingangs genannten Art bereitzustellen, das eine geringere Einbautiefe aufweist.

Erfindungsgemäß ist dafür ein Fahrzeugbelüftungssystem vorgesehen, mit einem ersten Luftführungskanäl, der eine erste Luftaustrittsöffnung aufweist, einem parallel zum ersten Luftführungskanal angeordneten zweiten Luftführungskanal, der eine zweite Luftaustrittsöffnung aufweist, und mit einer in Strömungsrichtung hinter den Luftführungskanälen angeordneten Umlenkungseinrichtung, wobei die Umlenkungseinrichtung in Strömungsrichtung unmittelbar an die erste und die zweite Luftaustrittsöffnung angrenzt, mehrere Lamellen aufweist und den gesamten Bereich der Luftaustrittsöffnungen abdeckt, wobei der erste Luftführungskanal mehrere Umlenkmittel aufweist, die als mehrere parallel zueinander angeordnete, miteinander gekoppelte Lamellen ausgeführt sind, die im Wesentlichen quer zu den Lamellen der Umlenkungseinrichtung angeordnet sind. Bei den im Stand der Technik verwendeten Fahrzeugbelüftungssystemen ist die Umlenkeinrichtung aufgrund der langen, röhrenförmigen Luftführungskanäle in relativ großem Abstand von den Luftführungskanälen und insbesondere von den Verwirbelungselementen angeordnet. Dadurch ergibt sich zum einen eine sehr große Einbautiefe. Zum anderen trifft der verwirbelte Luftstrom auf die Innenwand des Belüftungssystems und lehnt sich an diese an. D.h. der verwirbelte Luftstrom wird durch das Gehäuse wieder ausgerichtet und somit die Wirkung des Diffusors zumindest teilweise aufgehoben. In dem erfindungsgemäßen Fahrzeugbelüftungssystem grenzt die Umlenkeinrichtung unmittelbar sowohl an den ersten Luftführungskanal als auch an den zweiten Luftführungskanal. Dadurch ist zum einen eine geringe Einbautiefe möglich. Zum anderen tritt der Luftstrom aus dem Fahrzeugbelüftungssystem aus, bevor dieser im Inneren des Fahrzeugbelüftungssystems umgelenkt werden kann. Die Wirkung des Fahrzeugbelüftungssystems wird so deutlich verbessert, da der verwirbelte Luftstrom nicht wieder kanalisiert wird. Zudem ist eine Verteilung des Luftströms über einen breiteren Bereich im Fahrzeuginnenraum möglich.

In einer bevorzugten Ausführungsform ist der erste Luftführungskanal innerhalb des zweiten Luftführungskanals angeordnet, wodurch eine kompaktere Bauweise des Fahrzeugbelüftungssystems möglich ist. Der zweite Luftführungskanal ist beispielsweise ringförmig ausgebildet, um einen wirbelförmigen Luftstrom zu erzeugen. Der erste Luftführungskanal kann im Inneren des ringförmigen zweiten Luftführungskanals angeordnet sein, so dass eine sehr kompakte Ausführung des Fahrzeugbelüftungssystems möglich ist.

Der erste und/oder der zweite Luftführungskanal können Umlenkmittel zur Umlenkung des Luftstroms aufweisen. Mit diesen Umlenkmitteln kann der aus den Luftführungskanälen austretende Luftstrom gesteuert werden, so dass eine genauere Anpassung des Luftstroms möglich ist.

Der erste Luftführungskanal kann beispielsweise mehrere im Wesentlichen parallel angeordnete Lamellen aufweisen, die einen zur Längsachse des ersten Luftführungskanals verstellbaren Neigungswinkel aufweisen. Die Lamellen sind vorzugsweise so angeordnet, dass eine Ablenkung des Luftstromes quer zur Ablenkungsrichtung der Umlenkeinrichtung erfolgt. Somit ist eine sehr weite Anpassung des Ablenkwinkels in alle Richtungen möglich.

Die Umlenkmittel des zweiten Luftführungskanals weisen beispielsweise mehrere zur Längsachse des zweiten Luftführungskanals geneigte Schaufeln auf. Diese sorgen für eine Aufweitung des Luftstroms, wodurch der Luftstrom verlangsamt wird. Eine oft als unangenehme empfundene direkte Anströmung des Fahrzeuginsassen kann damit verhindert werden. Die Schaufeln können beispielsweise einen zur Längsachse des zweiten Luftführungskanals veränderlichen Winkel aufweisen oder gebogen ausgebildet sein.

Die Ablenkungseinrichtung des Fahrzeugbelüftungssystems weist vorzugsweise mehrere im Wesentlichen parallel angeordnete Lamellen auf, die einen verstellbaren Neigungswinkel aufweisen.

Das Fahrzeugbelüftungssystem kann zudem Sperreinrichtungen aufweisen, die in Strömungsrichtung vor dem ersten und/oder dem zweiten Luftführungskanal angeordnet sind. Diese können jeweils den ersten und/oder den zweiten Luftführungskanal ganz oder teilweise verschließen, wodurch eine Anpassung des Volumens des Luftstroms bzw. der Teilströme möglich ist. Bei einem geschlossenen zweiten Luftführungskanal erfolgt beispielsweise eine gerichtete Belüftung des Innenraums ausschließlich durch den ersten Luftführungskanal, so dass eine genaue Ausrichtung des Luftstorms möglich ist. Ist dagegen der zweite Luftführungskanal geöffnet und der erste Luftführungskanal geschlossen, erfolgt eine Verwirbelung des Luftstroms, sodass ein gerichteter, eventuell als unangenehm empfundener Luftstrom verhindert wird. Durch ein teilweises Schließen oder Öffnen der Sperreinrichtungen kann das Fahrzeugbelüftungssystem zwischen diesen beiden Zuständen beliebig angepasst werden.

Der Querschnitt des ersten Luftführungskanals und des zweiten Luftführungskanals kann beliebig an die Einbaubedingungen in einem Fahrzeug angepasst werden. Es ist beispielsweise denkbar, dass der zweite Luftführungskanal einen im Wesentlichen rechteckigen Querschnitt aufweist. Es ist aber auch denkbar, dass das Fahrzeugbelüftungssystem einen beliebigen anderen Querschnitt aufweist.

In einer bevorzugten Ausführungsform ist das Verhältnis der Querschnittsfläche des ersten Luftführungskanals zur Querschnittsfläche des zweiten Luftführungskanals 1:1. Dieses Verhältnis der Querschnittsflächen zueinander ermöglicht eine ideale Abstimmung der Luftströme des ersten und des zweiten Luftführungskanals. Wäre der erste Luftführungskanal im Verhältnis zum zweiten Luftführungskanal kleiner, würde bei geschlossenem zweiten Lüftführungskanal eine zu starke Konzentrierung des Luftstromes erfolgen. Wäre der erste Luftführungskanal größer, wäre die Wirkung der gerichteten Belüftung nicht ausreichend.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines erfindungsgemäßen Fahrzeugbelüftungssystems,
- Figur 2 eine zweite perspektivische Ansicht des Fahrzeugbelüftungssystems aus Figur 1,
- Figur 3 einen vertikalen Schnitt durch das Fahrzeugbelüftungssystem aus Figur 1,
- Figur 4 einen horizontale Schnitt durch das Fahrzeugbelüftungssystem aus Figur 1,
- Figur 5 eine Explosionsansicht des Fahrzeugbelüftungssystems aus Figur 1, und
- Figur 6 das Fahrzeugbelüftungssystem aus Figur 3 in einem ersten Herstellungsschritt,

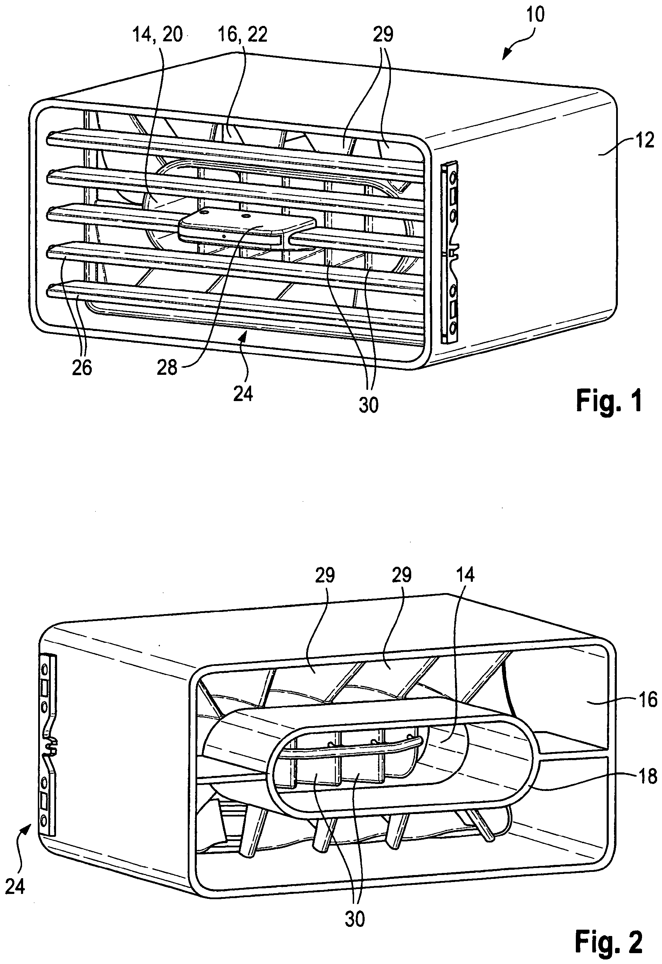

Das in den Figuren 1 und 2 dargestellte Fahrzeugbelüftungssystem 10 weist ein Gehäuse 12 auf, das hier im Wesentlichen einen rechteckigen Querschnitt aufweist. Innerhalb des Gehäuses 12 sind ein erster Luftführungskanal 14 und ein zweiter Luftführungskanal 16 vorgesehen. Der erste Luftführungskanal 14 hat einen im Wesentlichen ovalen Querschnitt und ist durch eine im Gehäuse 12 angeordnete Zwischenwand 18 gebildet. Der erste Luftführungskanal ist hier innerhalb des zweiten Luftführungskanals 16 angeordnet. Es ist aber auch denkbar, die Luftführungskanäle 14, 16 beispielsweise nebeneinander anzuordnen. Der zweite Luftführungskanal 16 ist durch die Zwischenwand 18 und das Gehäuses 12 begrenzt.

Beide Luftführungskanale 14, 16 sind im wesentlichen parallel zueinander angeordnet und weisen eine einem Fahrzeuginnenraum zugewandte Austrittsöffnung 20, 22 auf. Wie insbesondere in Figur 1 zu sehen ist, sind die Luftaustrittsöffnung 20 des ersten Luftführungskanals 14 und Luftaustrittsöffnung 22 des zweiten Luftführungskanals 16 im Wesentlichen in einer Ebene angeordnet.

In Strömungsrichtung hinter den Luftaustrittsöffnungen 20, 22 ist hier eine Umlenkeinrichtung 24 angeordnet, die den aus den Luftführungskanälen 14, 16 austretenden Luftstrom vertikal ablenken kann. Die Umlenkeinrichtung weist mehrere horizontal angeordnete Lamellen 26 auf, die miteinander gekoppelt sind und durch ein Bedienelement 28 verschwenkt werden können, so dass der Neigungswinkel der Lamellen zur Längsachse des Luftführungskanals 14, 16 geändert werden kann.

Der zweite Luftführungskanal 16 weist mehrere im Luftstrom angeordnete Umlenkmittel auf, die hier durch radial angeordnete, zur Längsachse des Luftführungskanals 16 geneigte Schaufeln 29 gebildet sind. Die durch den zweiten Luftführungskanal 16 strömende Luft wird dadurch verwirbelt und die Luft über einen breiten Winkel hinter dem Fahrzeugbelüftungssystem gestreut. Durch die Streuung des Luftstroms wird zum einen die Strömungsgeschwindigkeit des Luftstrom reduziert. Zum anderen erfolgt eine bessere Durchmischung der zugeführten Frischluft mit der Luft im Fahrzeuginnenraum. Dadurch erfolgt eine indirekte Belüftung, die häufig als angenehmer empfunden wird als ein direkt auftreffender Luftstrom.

Der erste Luftführungskanal 14 weist ebenfalls mehrere Umlenkmittel, hier mehrere parallel zueinander angeordnete, miteinander gekoppelte Lamellen 30, auf, die im Wesentlichen quer zu den Lamellen 26 der Ablenkungseinrichtung 24 angeordnet sind. Der Neigungswinkel der Lamellen 30 zur Längsachse des Luftführungskanals 14 ist ebenfalls veränderlich, sodass die Richtung der ausströmenden Luft bezüglich Figur 1 nach links oder nach rechts abgelenkt werden kann. In Verbindung mit den Lamellen 26 der Ablenkungseinrichtung 24 kann die durchströmende Luft in einem breiten Winkel horizontal und vertikal in den Fahrzeuginnenraum abgelenkt werden. Da im ersten Luftführungskanal 14 keine Verwirbelung der Luftströmung erfolgt, ist eine gezielte Belüftung einzelner Bereiche möglich.

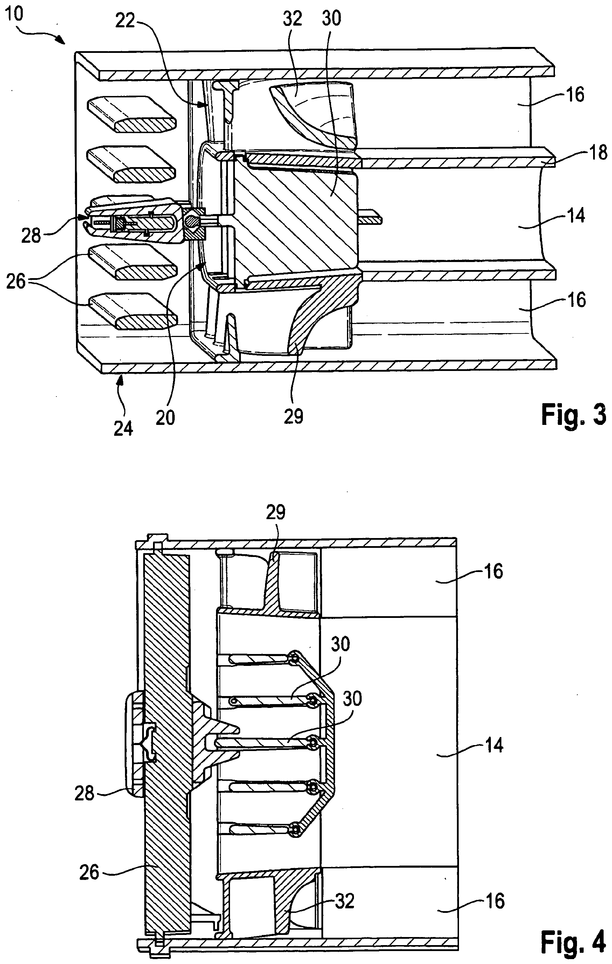

Wie in den Figuren 3 und 4 zu sehen ist, greift das Bedienelement 28 der Umlenkeinrichtung 24 an den Lamellen 30 des ersten Luftführungskanals 14 an, so dass sowohl eine horizontale als auch eine vertikale Verstellung des Luftstromes mit dem Steuerelement 28 möglich ist. Es ist aber auch denkbar, dass die Lamellen 30 des ersten Luftführungskanals 14 unabhängig von der Umlenkeinrichtung gesteuert werden können.

Die Umlenkeinrichtung 24 ist in Strömungsrichtung unmittelbar hinter dem ersten und dem zweiten Luftführungskanal 14, 16 bzw. direkt an die Luftautrittsöffnungen 20, 22 angrenzend angeordnet. Der Abstand der Lamellen 26 der Umlenkeinrichtung 24 zu den Austrittsöffnungen 20, 22 ist vorzugsweise geringer als 30 mm, vorzugsweise unter 25 mm.

Der aus dem ersten und dem zweiten Luftführungskanal 14, 16 austretende Luftstrom kann so direkt umgelenkt und in den Fahrzeuginnenraum geleitet werden. Wäre die Umlenkeinrichtung 24 weiter von den Luftführungskanälen 14, 16 entfernt, würde es zwischen den Austrittsöffnungen 20, 22 der Luftführungskanäle 14, 16 und der Umlenkeinrichtung 24 bereits zu einer Aufweitung des Luftstroms kommen. Im weiteren Verlauf würde sich der verwirbelte Luftstrom wieder an das Gehäuse 12 anlegen, so dass der verwirbelte Luftstrom wieder ausgerichtet und konzentriert würde. Die Wirkung der Umlenkeinrichtung 24 wäre reduziert, bzw. durch die Umlenkeinrichtung 24 würde wieder eine zusätzliche Ausrichtung des bereits verwirbelten Luftstrom erfolgen.

Hier nicht dargestellt sind Absperreinrichtungen, durch die der erste Luftführungskanal 14 und der zweite Luftführungskanal 16 getrennt voneinander ganz oder teilweise geschlossen werden können. Die Luftzuführung zum Fahrzeugbelüftungssystem 10 kann über einen gemeinsamen Kanal erfolgen. Die Aufteilung der durchströmenden Luft auf den ersten bzw. den zweiten Luftführungskanal 14, 16 erfolgt durch die Sperreinrichtungen.

Ist die Sperreinrichtung des ersten Luftführungskanals 14 beispielsweise geschlossen, strömt die Luft ausschließlich durch den zweiten Luftführungskanal 16, sodass der gesamte Luftstrom verwirbelt wird. Ist dagegen der zweite Luftführungskanal 16 geschlossen und der erste Luftführungskanal 14 geöffnet, erfolgt eine gerichtete Belüftung des Innenraums. Durch ein teilweises Schließen oder Öffnen der Sperreinrichtungen ist zwischen diesen beiden Zuständen eine beliebige Anpassung des Luftstroms möglich. Es ist beispielsweise auch denkbar, dass sowohl der erste Luftführungskanal 14 als auch der zweite Luftführungskanal 16 vollständig geöffnet sind, so dass eine Überlagerung der beiden Luftströme erfolgt.

Alternativ ist es aber auch denkbar, dass der erste Luftführungskanal 14 und der zweite Luftführungskanal 16 getrennte Luftzuführungen aufweisen.

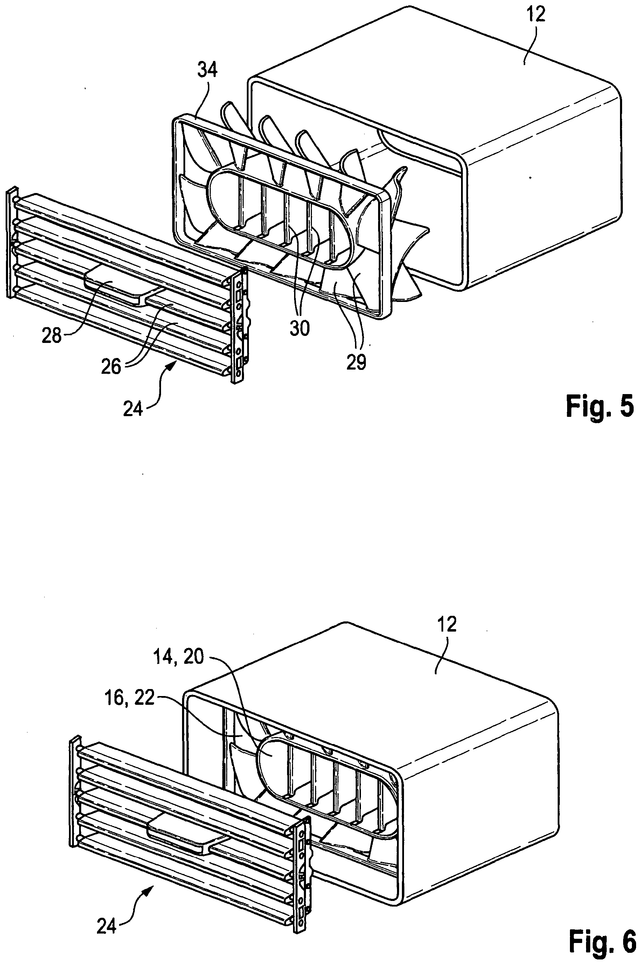

Eine Explosionsansicht des erfindungsgemäßen Fahrzeugbelüftungssystems 10 ist in den Figuren 5 und 6 dargestellt. In der hier dargestellten Ausführungsform weist das Fahrzeugbelüftungssystem 10 im Wesentlichen drei vorgefertigte Baugruppen auf. Die erste Baugruppe besteht hier aus dem Gehäuse 12 des Fahrzeugbelüftungssystems, das den zweiten Luftführungskanal 16 und den in Strömungsrichtung gesehen vorderen Teil des Luftführungskanals 14 beinhaltet. Die Zwischenwand 18, die den ersten Luftführungskanal 14 umgibt, ist hier einstückig mit dem Gehäuse 12 ausgebildet. Es ist aber auch denkbar, dass der Luftführungskanal 14 ein separates Bauteil ist.

In das Gehäuse 12 wird ein Rahmen 34 eingesetzt, der den hinteren Teil des ersten Luftführungskanals 14 sowie die Umlenkmittel des ersten und des zweiten Luftführungskanals 14, 16 trägt. Dadurch ist eine einfache individuelle Anpassung der Umlenkmittel an Kundenwünsche möglich.

Die dritte Baugruppe ist hier die Umlenkeinrichtung 24, die in einem letzten Arbeitsschritt vorne in das Gehäuse 12 eingesetzt wird (Figur 6).

Die Fläche der Ausströmöffnung 20 des ersten Luftführungskanals 14 entspricht hier im Wesentlichen der Fläche der Ausströmöffnung 22 des zweiten Luftführungskanals 16, d.h. das Verhältnis der Querschnittsflächen der Luftaustrittsöffnungen 20, 22 beträgt 1 : 1. Dadurch kann eine ideale Verteilung des Luftstromes erzielt werden. Davon abweichend sind aber auch andere Querschnittsverhältnisse denkbar, um das Fahrzeugbelüftungssystem 10 an Kundenwünsche anzupassen.

Abweichend von der hier dargestellten Ausführungsform mit einem im Querschnitt im Wesentlichen rechteckigen Gehäuse 12, sind auch andere Gehäuseformen denkbar. Das Fahrzeugbelüftungssystem kann beispielsweise auch einen runden oder ovalen Querschnitt aufweisen.

## Patentansprüche

1. Fahrzeugbelüftungssystem (10)
mit einem ersten Luftführungskanal (14), der eine erste Luftaustrittsöffnung (20) aufweist,
einem parallel zum ersten Luftführungskanal (14) angeordneten zweiten Luftführungskanal (16), der eine zweite Luftaustrittsöffnung (22) aufweist,
und mit einer in Strömungsrichtung hinter den Luftführungskanälen (14, 16) angeordneten Umlenkungseinrichtung (24),
wobei die Umlenkungseinrichtung (24) in Strömungsrichtung unmittelbar an die erste und die zweite Luftaustrittsöffnung (20, 22) angrenzt, mehrere Lamellen (26) aufweist und den gesamten Bereich der Luftaustrittsöffnungen (20, 22) abdeckt, **dadurch gekennzeichnet, dass** der erste Luftführungskanal (14) mehrere Umlenkmittel aufweist, die als mehrere parallel zueinander angeordnete, miteinander gekoppelte Lamellen (30) ausgeführt sind, die im Wesentlichen quer zu den Lamellen (26) der Umlenkungseinrichtung (24) angeordnet sind.

2. Fahrzeugbelüftungssystem nach Anspruch 1, **dadurch gekennzeichnet, dass** der erste Luftführungskanal (14) innerhalb des zweiten Luftführungskanals (16) angeordnet ist.

3. Fahrzeugbelüftungssystem nach Anspruch 1 oder 2, **dadurch gekennzeichnet, dass** der erste und/oder der zweite Luftführungskanal (14, 16) Umlenkmittel zur Umlenkung des Luftstrom aufweisen.

4. Fahrzeugbelüftungssystem nach Anspruch 3, **dadurch gekennzeichnet, dass** die Umlenkmittel des ersten Luftführungskanals (14) mehrere im wesentlichen parallel angeordnete Lamellen (30) aufweisen, die einen zur Längsachse des ersten Luftführungskanals (14) verstellbaren Neigungswinkel aufweisen.

5. Fahrzeugbelüftungssystem nach Anspruch 3 oder 4, **dadurch gekennzeichnet, dass** die Umlenkmittel des zweiten Luftführungskanals mehrere zur Längsachse des zweiten Luftführungskanals (16) geneigte Schaufeln (32) sind.

6. Fahrzeugbelüftungssystem nach einem der vorhergehenden Ansprüche, **dadurch gekennzeichnet, dass** die Umlenkeinrichtung (24) mehrere im Wesentlichen parallel angeordnete Lamellen (26) aufweist.

7. Fahrzeugbelüftungssystem nach einem der vorhergehenden Ansprüche, **dadurch gekennzeichnet, dass** in Strömungsrichtung vor dem ersten und dem zweiten Luftführungskanal (14, 16) jeweils eine Sperreinrichtung angeordnet ist, die jeweils den ersten bzw. den zweiten Luftführungskanal (14, 16) ganz oder teilweise verschließen kann.

8. Fahrzeugbelüftungssystem nach einem der vorhergehenden Ansprüche, **dadurch gekennzeichnet, dass** das Verhältnis der Querschnittsflächen des ersten Luftführungskanals und des zweiten Luftführungskanals im Wesentlichen 1 : 1 ist.

9. Fahrzeugbelüftungssystem nach einem der vorhergehenden Ansprüche, **dadurch gekennzeichnet, dass** der zweite Luftführungskanal einen im Wesentlichen rechteckigen Querschnitt aufweist.

## Claims

1. Vehicle ventilation system (10)
having a first air guiding duct (14) which has a first air outlet opening (20),
a second air guiding duct (16) which is arranged parallel to the first air guiding duct (14) and has a second air outlet opening (22),
and having a deflection device (24) which is arranged downstream of the air guiding ducts (14, 16) in the flow direction,
the deflection device (24) adjoining the first and the second air outlet opening (20, 22) directly in the flow direction, having a plurality of slats (26) and covering the entire region of the air outlet openings (20, 22), **characterized in that** the first air guiding duct (14) has a plurality of deflection means which are configured as a plurality of slats (30) which are arranged parallel to one another, are coupled to one another and are arranged substantially transversely with respect to the slats (26) of the deflection device (24).

2. Vehicle ventilation system according to Claim 1, **characterized in that** the first air guiding duct (14) is arranged within the second air guiding duct (16).

3. Vehicle ventilation system according to Claim 1 or 2, **characterized in that** the first and/or the second air guiding duct (14, 16) have/has deflection means for deflecting the air flow.

4. Vehicle ventilation system according to Claim 3, **characterized in that** the deflection means of the first air guiding duct (14) have a plurality of slats (30) which are arranged substantially in parallel and have an angle of inclination which can be adjusted with respect to the longitudinal axis of the first air guiding duct (14).

5. Vehicle ventilation system according to Claim 3 or 4, **characterized in that** the deflection means of the second air guiding duct are a plurality of blades (32) which are inclined with respect to the longitudinal axis of the second air guiding duct (16).

6. Vehicle ventilation system according to one of the preceding claims, **characterized in that** the deflection device (24) has a plurality of slats (26) which are arranged substantially in parallel.

7. Vehicle ventilation system according to one of the preceding claims, **characterized in that** in each case one shut-off device is arranged upstream of the first and the second air guiding duct (14, 16) in the flow direction, which shut-off device can close in each case the first and the second air guiding duct (14, 16) completely or partially.

8. Vehicle ventilation system according to one of the preceding claims, **characterized in that** the ratio of the cross-sectional areas of the first air guiding duct and the second air guiding duct is substantially 1:1.

9. Vehicle ventilation system according to one of the preceding claims, **characterized in that** the second air guiding duct has a substantially rectangular cross section.

## Revendications

1. Installation de ventilation pour véhicule (10), avec un premier canal de guidage d'air (14), qui présente une première ouverture de sortie d'air (20), avec un deuxième canal de guidage d'air (16) disposé parallèlement au premier canal de guidage d'air (14), qui présente une deuxième ouverture de sortie d'air (22),
et avec un dispositif de déviation (24) disposé derrière les canaux de guidage d'air (14, 16) dans la direction d'écoulement,
dans lequel le dispositif de déviation (24) est directement adjacent dans la direction d'écoulement à la première et à la deuxième ouvertures de sortie d'air (20, 22), présente plusieurs lamelles (26) et recouvre toute la zone des ouvertures de sortie d'air (20, 22), **caractérisée en ce que** le premier canal de guidage d'air (14) présente plusieurs moyens de déviation, qui sont réalisés sous la forme de plusieurs lamelles (30) couplées l'une à l'autre et disposées parallèlement l'une à l'autre, qui sont disposées essentiellement transversalement aux lamelles (26) du dispositif de déviation (24).

2. Installation de ventilation pour véhicule selon la revendication 1, **caractérisée en ce que** le premier canal de guidage d'air (14) est disposé à l'intérieur du deuxième canal de guidage d'air (16).

3. Installation de ventilation pour véhicule selon la revendication 1 ou 2, **caractérisée en ce que** le premier et/ou le deuxième canal de guidage d'air (14, 16) présente des moyens de déviation pour la déviation du courant d'air.

4. Installation de ventilation pour véhicule selon la revendication 3, **caractérisée en ce que** les moyens de déviation du premier canal de guidage d'air (14) présentent plusieurs lamelles disposées essentiellement en parallèle (30), qui présentent un angle d'inclinaison réglable par rapport à l'axe longitudinal du premier canal de guidage d'air (14).

5. Installation de ventilation pour véhicule selon la revendication 3 ou 4, **caractérisée en ce que** les moyens de déviation du deuxième canal de guidage d'air présentent plusieurs aubes (32) inclinées par rapport à l'axe longitudinal du deuxième canal de guidage d'air (16).

6. Installation de ventilation pour véhicule selon l'une quelconque des revendications précédentes, **caractérisée en ce que** le dispositif de déviation (24) présente plusieurs lamelles (26) disposées essentiellement en parallèle.

7. Installation de ventilation pour véhicule selon l'une quelconque des revendications précédentes, **caractérisée en ce qu'**un dispositif d'arrêt est disposé respectivement avant le premier et avant le deuxième canal de guidage d'air (14, 16) dans la direction d'écoulement, lequel peut respectivement fermer totalement ou partiellement le premier ou le deuxième canal de guidage d'air (14, 16).

8. Installation de ventilation pour véhicule selon l'une quelconque des revendications précédentes, **caractérisée en ce que** le rapport des aires de section transversale du premier canal de guidage d'air et du deuxième canal de guidage d'air vaut essentiellement 1:1.

9. Installation de ventilation pour véhicule selon l'une quelconque des revendications précédentes, **caractérisée en ce que** le deuxième canal de guidage d'air présente une section transversale essentiellement rectangulaire.
